# EUROPÄISCHE PATENTANMELDUNG

(11) **EP 0 949 551 A2**
(43) Veröffentlichungstag der Anmeldung: **13.10.1999**
(21) Anmeldenummer: 99106972.5
(22) Anmeldetag: 09.04.1999
(51) Int. Cl.: G05B 19/418

(54) **Verfahren zum Betrieb eines verteilten Prozessrechnersystems**

(30) Priorität: 09.04.1998 DE 19815921
(71) Anmelder: PROLEIT Gesellschaft für technologieorientierte Prozessleit- und Steuerungssoftware mbH, 91074 Herzogenaurach (DE)
(72) Erfinder: Kohl, Jürgen, 91085 Weisendorf (DE)
(74) Vertreter: Hübner, Gerd, Dipl.-Phys.

(57) **Zusammenfassung**

Ein Verfahren zum Betrieb eines verteilten Prozeßrechnersystems für die Steuerung verfahrenstechnischer Anlagen mit Komponenten entsprechend einer den Anlagenprozeß charakterisierenden steuerungstechnischen Schrittkette, die die einzelnen Anlagenkomponenten mit ihren Funktionen ablaufgerecht wiedergibt weist folgende Verfahrensschritte auf:
- Installieren eines Software-Steuerungsmoduls (SM) für jede Anlagenkomponente (W-001, ...) im zugehörigen Prozeßrechner (PC2), das nach Funktion und Befehlssatz für die jeweilige Komponente (W-001, ...) sowie entsprechend dem Prozeßrechnertyp definiert ist,
- Selektieren eines koordinierenden Leitrechners (PC1) aus dem Prozeßrechnersystem,
- Zerlegen der steuerungstechnischen Schrittkette unter Zusammenfassen der einem jeweiligen Prozeßrechner (PC2 - PC4) zugeordneten Schritte zu einer Teilschrittkette und dynamisches Laden der jeweiligen Teilschrittkette in den jeweils zugeordneten Prozeßrechner (PC2 - PC4) mit Hilfe des koordinierenden Leitrechners (PC1), und
- Ablauf der steuerungstechnischen Schrittkette durch koordiniertes Abarbeiten der dynamisch verteilten Teilschrittketten in den einzelnen Prozeßrechnern (PC2 - PC4) unter Verwendung der in den Prozeßrechnern (PC2 - PC4) geladenen Software-Steuerungsmodule (SM).

## Beschreibung

Die Erfindung betrifft ein Verfahren zum Betrieb eines verteilten Prozeßrechnersystems für die Steuerung verfahrenstechnischer Anlagen mit Komponenten wie Aktoren, Sensoren oder dergleichen, entsprechend einer den Anlagenprozeß charakterisierenden steuerungstechnischen Schrittkette, die die einzelnen Komponenten mit ihren Funktionen ablaufgerecht wiedergibt.

Zum Hintergrund der Erfindung ist festzuhalten, daß im Zuge der modernen Anlagentechnik ein immer höherer Automatisierungsgrad erreicht wird. Hierbei kommen dezentrale oder verteilte Automatisierungs- bzw. Prozeßleitsysteme zum Einsatz, die sich seit ihrer Einführung neben den konventionellen, voll parallel sowie den zentral von einem Prozeßrechner gesteuerten Systemen rasch zu einem leistungsfähigen Werkzeug der Prozeßautomatisierung entwickelt haben.

Mit zunehmendem Automatisierungsgrand steigt jedoch die Komplexität solcher Systeme überproportional an, so daß zumindest zentral organisierte Prozeßrechnersysteme beim Betrieb solcher automatisierter Anlagen an ihre Grenzen stoßen. Auch aufgrund der Ausfallcharakteristik zentral organisierter Systeme - bei einem Systemfehler steht die ganze Anlage - werden zunehmend kleine und dezentral organisierte Prozeßrechner mit der jeweils vor Ort benötigten Rechnerkapazität eingesetzt.

Aufgrund dieser Dezentralisierung werden logischerweise entsprechend hohe Anforderungen an die Kommunikationsfähigkeit der einzelnen Prozeßrechner untereinander gestellt. Dies wird in der Regel durch eine Verbindung der einzelnen Prozeßrechner untereinander über ein Netzwerk realisiert, wobei die den Anlagenprozeß charakterisierende steuerungstechnische Schrittkette als sogenanntes Masterprogramm auf dem Leitrechner abläuft. Dieser greift über das Netzwerk auf Eingänge und Ausgänge der anderen Prozeßrechner, Mikroprozessoren oder anderer Automatisierungskomponenten zu und erteilt diesen entsprechende Schreib/Lese-Befehle. Jeder dieser Schreib/Lese-Befehle wird einzeln in den jeweiligen Komponenten programmiert. Die hierfür zuständige Software ist entsprechend der Automatisierungsaufgabe individuell ausgelegt, wobei sie außerdem für einen sicheren Betrieb sorgt, falls über das bestehende Netzwerk keine Datenkommunikation mehr mit dem Leitrechner erfolgen kann, in dem die Schrittkette abläuft.

Eine auf der vorstehenden Steuerungsarchitektur aufbauende Lösung sieht vor, daß die eigentliche Master-Schrittkette in mehrere Schrittketten aufgeteilt wird. Diese Unterschrittketten laufen dann in unterschiedlichen Komponenten ab, die untereinander über ihre Ausgänge und Eingänge und das diese verbindende Netzwerk Zugriff haben. Über dieses Netzwerk werden Koordinierungsinformationen für die verschiedenen Unterschrittketten in den verschiedenen Komponenten oder Prozeßrechnern ausgetauscht. Auch hier müssen die verschiedenen Unterschrittketten Sorge dafür tragen, daß die Anlage bei Ausfall des Netzwerkes in einen betriebssicheren Zustand gebracht wird.

Die beiden vorstehenden Verfahren bergen verschiedene Probleme in sich, die insbesondere bei einer Erhöhung der Anzahl der Automatisierungskomponenten zu erheblichen Problemen für den Programmersteller und dem späteren Anlagenbetreiber führen und wie folgt zu umreißen sind:
- Beim Gesamtprogrammieraufwand erhöht sich der Anteil von Software überproportional, die sich ausschließlich um die Koordinierung einzelner Programmteile und Automatisierungsprozesse zu kümmern hat.
- Der Aufwand für die Erstellung der eigentlichen Steuerungs- bzw. Regelungslogik steigt rapide an, da immer mehr Unterschrittketten für die beteiligten Automatisierungskomponenten und Prozeßrechner zu erstellen sind.
- Da aufgrund der vorstehenden Umstände Wechselwirkungen zwischen immer mehr Komponenten zu beachten sind, steigt die Gefahr erheblich an, notwendige sogenannte "Vetriegelungen" oder Koordinierungsinformationen zu übersehen.
- Bei einer späteren Erweiterung oder einem Umbau der Anlage werden die vorstehenden Gefahren noch erhöht. Hinzu kommt, daß solche späteren Umbau- oder Erweiterungsmaßnahmen häufig alle beteiligten Automatisierungskomponenten betreffen. Dies bedeutet, daß oft die komplette verfahrenstechnische Anlage abgeschaltet werden muß, um z. B. nur wenige neue Anlagenteile mit entsprechenden Wegen einzubinden. Nun ziehen sich gerade Wegeschaltungen häufig durch eine Mehrzahl der vorhanden Automatisierungskomponenten, was zu einer Änderung an den Programmen nahezu aller Automatisietungskomponenten führt. Deshalb werden oft notwendige Erweiterungs- oder Umbauten teilweise nicht mehr durchgeführt, weil sie wirtschaftlich nicht tragbar und aufgrund ihrer Komplexität überhaupt nicht mehr überschaubar sind, obwohl die Anlagen mit Technik neuester Bauart betrieben werden.
- Die oben erwähnten Unterschrittketten, die die notwendigen Koordinierungsmaßnahmen beachten, sind jeweils durch speziell auf die Anlagenkomponente zugeschnittenen Programmcode realisiert. Bei Programmtest und Inbetriebnahme der verfahrenstechnischen Anlage müssen daher nicht nur die korrekte Logik der Schrittkette, sondern auch die korrekte Umsetzung in den Programmcode, die korrekte Koordinierung der Unterschrittketten sowie die korrekte Umsetzung der Logik bei Störungsbehandlungsstrategien getestet werden. Die Prüfung erweitert sich zu dem auf die Nutzung der korrekten Speicherbereiche, auf die Mehrfachnutzung von angesteuerten Ausgängen durch zeitgleich ablaufende Unterschrittketten usw.
- Ein weiterer Nachteil des Standes der Technik liegt darin, daß alle Unterschrittketten jeweils im Speicher der Automatisierungskomponenten dauerhaft verfügbar sind, auch wenn sie von der steuerungstechnischen Schrittkette zu einem bestimmten Zeitpunkt oder gar über einen längeren Zeitraum nicht benötigt werden. Es liegt also eine große Speicherverschwendung vor, wenn beispielsweise nur maximal 10 % des gesamten Programmcodes zeitgleich benötigt werden.

Nach dem heutigen Stand der Technik würde also ein Steuerungsprogrammierer für alle in einem verteilten Prozeßrechnersystem vorhandenen Prozeßrechner oder speicherprogrammierbaren Steuerungen (SPSen) Softwareprogramme erstellen, die kundenspezifisch arbeiten und somit die kundenspezifischen verfahrenstechnischen Anforderungen wie auch die hardwaretechnischen Anforderungen berücksichtigt. Dabei wird automatisch Software erstellt, die auch über ein Computernetzwerk die Koordinierung der einzelnen Komponente durchführt.

Wird die Anlage - wie bereits angesprochen - später umgebaut oder z. B. um weitere Steuercomputer erweitert, so muß die komplette Software überarbeitet, neu verifiziert und in Betrieb genommen werden. Ab einer gewissen Menge von Schrittketten, die über mehrere Steuercomputer verteilt arbeiten müssen, entsteht eine Komplexität, die Umbauten oder Erweiterungen wirtschaftlich uninteressant bzw. technisch fast nicht mehr handhabbar werden läßt.

Ausgehend von der geschilderten Problematik liegt der Erfindung die Aufgabe zugrunde, ein Verfahren zum Betrieb eines verteilten Prozeßrechnersystems anzugeben, das eine verbesserte Variabilität, Hardware-Unabhängigkeit und Möglichkeit zur nachträglichen Änderung oder Erweiterung der damit betriebenen verfahrenstechnischen Anlage erzielt. Diese Aufgabe wird durch ein Verfahren zum Betrieb eines verteilten Prozeßrechnersystems mit den kennzeichnenden Schritten gemäß Anspruch 1 gelöst. Demnach sind folgende Verfahrensschritte vorgesehen:
- Installieren eines Software-Steuerungsmoduls für jede Anlagenkomponente im zugehörigen Prozeßrechner, das nach Funktion und Befehlssatz für die jeweilige Komponente sowie entsprechend dem Prozeßrechnertyp definiert ist,
- Selektieren eines koordinierenden Leitrechners aus dem Prozeßrechnersystem,
- Zerlegen der steuerungstechnischen Schrittkette unter Zusammenfassen der einem jeweiligen Prozeßrechner zugeordneten Schritte zu einer Teilschrittkette und dynamisches Laden der jeweiligen Teilschrittkette in den jeweils zugeordneten Prozeßrechner mit Hilfe des koordinierenden Leitrechners, und
- Ablauf der steuerungstechnischen Schrittkette durch koordiniertes Abarbeiten der dynamisch verteilten Teilschrittketten in den einzelnen Prozeßrechnern unter Verwendung der in den Prozeßrechnern geladenen Software-Steuerungsmodule.

Dieses Verfahren wird im folgenden prinzipiell als "Verfahren einer dynamisch verteilten Schrittkette" bezeichnet. Im Gegensatz zum Stand der Technik wird dabei nicht dynamisch Programmcode erzeugt und verteilt, sondern es werden gerade beim Zerlegen der steuerungstechnischen Schrittkette, beim Zusammenfassen der einem jeweiligen Prozeßrechner zugeordneten Schritte zu einer Teilschrittkette und dem dynamischen Laden der jeweiligen Teilschrittkette in den jeweils zugeordneten Prozeßrechner projektierte Daten dynamisch in Abhängigkeit der existierenden Prozeßrechner auf diese verteilt und koordiniert abgearbeitet.

Diese Methode hat verschiedene Vorteile. So muß zum einen in den Prozeßrechnern, wie sie beispielsweise durch eine SPS oder einen PC repräsentiert werden, kein Programmcode mehr erzeugt und getestet werden. Zum anderen ist dieses Verfahren durch die Anwendung von Software-Steuerungsmodulen und deren entsprechende Ansteuerung hardwareunabhängig. Dies gestattet einen beliebigen Mischbetrieb von Computern der unterschiedlichsten Hersteller mit den unterschiedlichsten Betriebssystemen.

Die weiteren Unteransprüche betreffen vorteilhafte Ausgestaltungen des erfindungsgemäßen Verfahrens, wie sie zum besseren Verständnis anhand des nachfolgend beschriebenen Ausführungsbeispiels des erfindungsgemäßen Verfahrens näher erläutert werden. Dabei wird Bezug genommen auf die beigefügten Zeichnungen. Von diesen zeigt:
- Fig. 1: eine schematische Darstellung einer verfahrenstechnischen Anlage,
- Fig. 2: ein Blockschaltbild des Prozeßrechnersystems für die Steuerung der Anlage gemäß Fig. 1 mit Netzwerk und zugeordneten Aktoren und Sensoren,
- Fig. 3: ein gegenüber Fig. 2 durch die Software-Steuerungsmodule ergänztes Blockdiagramm, und
- Fig. 4: ein Blockdiagramm analog Fig. 3 mit ferner ergänzten Teilschrittketten.

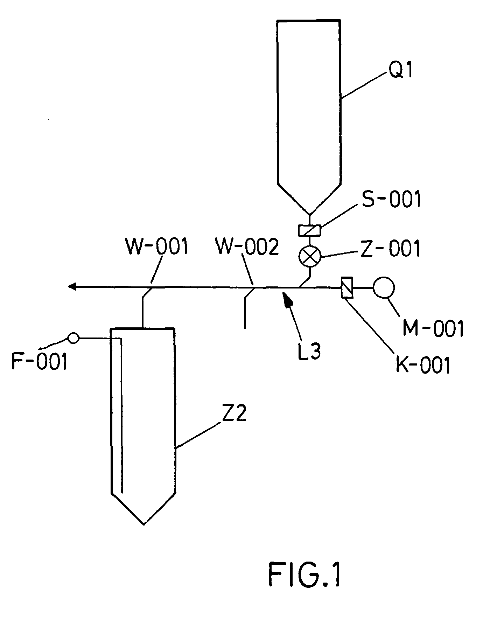

Anhand der in Fig. 1 dargestellten Förderanlage soll das Verfahren der dynamisch verteilten Schrittkette augenfällig erläutert werden. Die Förderanlage selbst weist zwei Materialbunker, nämlich einen Quellbunker Q1 und einen Zielbunker Z2 auf. Die beispielhafte verfahrenstechnische Aufgabe besteht darin, das Material aus dem Quellbunker Q1 in den Zielbunker Z2 zu transportieren. Dazu wird ein Leitungssystem L3 herangezogen, das über verschiedene Verzweigungen verfügt, um das Material bei einer abweichenden Aufgabe zu einem anderen Ort der verfahrenstechnischen Anlage zu transportieren.

Zur Steuerung dieser Anlage ist dem Quellbunker Q1 ein Bunkerauslaufschieber S-001 sowie eine Zellenradschleuse Z001 zur Dosierung des aus dem Quellbunker Q1 entnommenen Materials zugeordnet. Zur Förderung des Materials über das Leitungssystem L3 ist eine Förderluftklappe K-001 und ein dahinter befindliches Förderluftgebläse M-001 vorgesehen. An den oben bereits erwähnte Verzweigungen im Leitungssystem L3 sind Weichen W-001 und W-002 angeordnet. Schließlich ist der Zielbunker mit einer Füllstandssonde F-001 versehen.

Zur Beschreibung der vorstehend erörterten Anlage kann die folgende Schrittkette aufgestellte werden:
- Schritt 1: Wegelemente stellen
- Schritt 2: Förderluft ein
- Schritt 3: Dosierorgan ein
- Schritt 4: Materialaustrag freigeben
- Schritt 5: Warten auf Zielbunker voll
- Schritt 6: Materialaustrag sperren
- Schritt 7: Dosierorgan aus
- Schritt 8: Förderluft aus
- Schritt 9: Wegelemente rücksetzen

Unter Schritt 1 "Wegelemente stellen" ist zu verstehen, daß alle Weichen W-001, W-002 und Klappen K-001 etc., die relevant für den Materialweg durch die Anlage sind, entsprechend einzustellen sind. Mit Schritt 9 "Wegelemente rücksetzen" ist ausgesagt, daß alle Wegelemente in einen sicheren Zustand verbracht sind. Bei Komponenten, wie einem Schieber oder einer Klappe, ist dies in typischer Weise die stromlose Stellung, in der diese Komponenten in der Regel geschlossen sind. Bei einer Weiche liegt typischerweise eine solche "Default"-Position nicht vor.

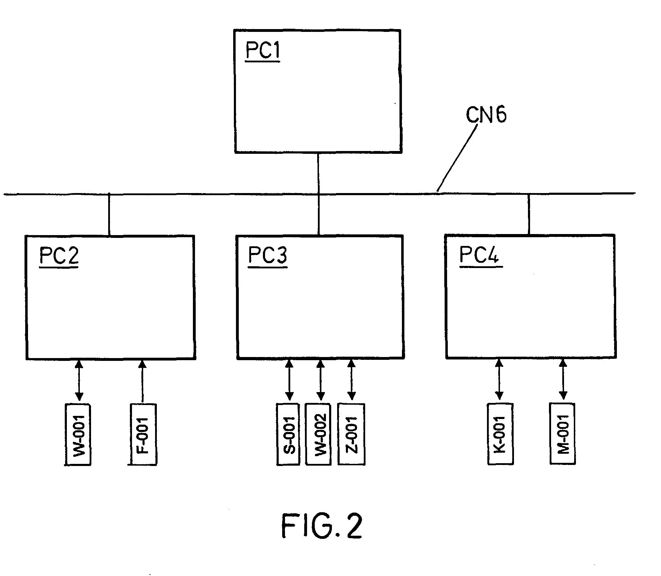

Wie aus Fig. 2 deutlich wird, werden in Fig. 1 gezeigte Anlagenkomponenten, wie die Weichen W-001, W-002, die Zellenradschleuse Z-001 usw. durch ein verteiltes Prozeßrechnersystem gesteuert, das über vier Prozeßrechner in Form von Personalcomputern PC1, PC2, PC3, PC4 verfügt. Diese sind über ein Computernetzwerk CN6 verbunden. Der Personalcomputer PC1 stellt den Leitrechner des Prozeßrechnersystems dar. Am Prozeßrechner PC2 sind die Weiche W-001 und die Fühlstandsonde F-001 angeschlossen. Personalcomputer PC3 steuert den Bunkerauslaufschieber S-001, die Weiche W-002 und die Zellenradschleuse Z-001. Schließlich ist Personalcomputer PC4 für die Förderluftklappe K-001 und das Fördergebläse M-001 zuständig.

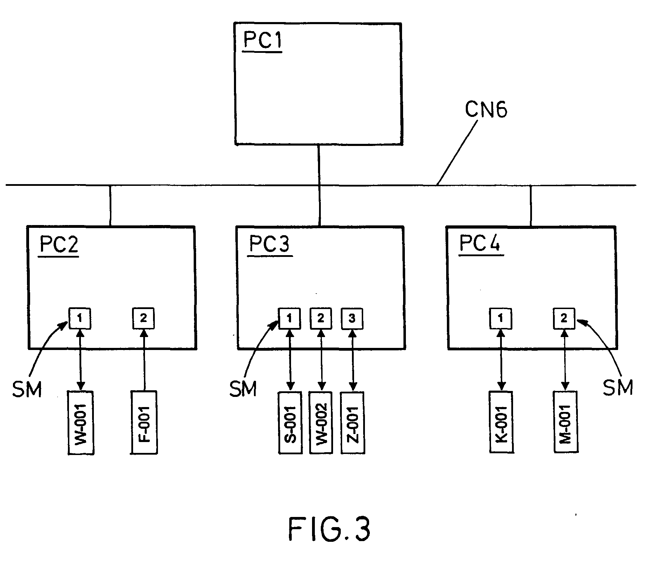

Ein Kernpunkt des erfindungsgemäßen Verfahrens der dynamisch verteilten Schrittkette besteht nun darin, daß in den Prozeßrechnern, die für die Steuerung von Anlagenkomponenten mittelbar zuständig sind, nämlich den Personalcomputern PC2, PC3, PC4, Software-Steuetungsmodule installiert werden, die ein eigenes spezielles Verhalten haben, also nach Funktion und Befehlssatz für die jeweilige Komponente sowie entsprechend dem Typ des jeweiligen Personalcomputers definiert sind. Es existiert also ein spezielles Software-Steuerungsmodul für die Weichen W-001, W-002, ein anderes Software-Steuerungsmodul für den Bunkerauslaufschieber S-001 usw. Dies ist in Fig. 3 angedeutet. In diesem Blockdiagramm sind in den Feldern für die Personalcomputer PC2, PC3, PC4 jeweils für die Identifizierung fortlaufend durchnumerierte Software-Steuerungsmodule SM eingezeichnet. Jeder Prozeßrechner verfügt also über eine gewisse Menge an solchen Software-Steuerungsmodulen SM. Jedes dieser Module SM beherrscht, wie aus dem folgenden deutlich wird, eine bestimmte Steuerungsaufgabe und kann entsprechende Befehle für die Ausführung dieser Steuerungsaufgabe verarbeiten. Beispielsweise wird ein Software-Steuerungsmodul SM für eine Weiche W-001 oder W-002 die Befehle "stelle auf Durchgang" und "stelle auf Abzweig" verstehen. Ein Software-Steuerungsmodul SM für den Bunkerauslaufschieber S-001 kann die Kommandos "auf" und "zu" umsetzen. Das Modul SM für die Fühlstandsonde F-001 wird für eine Aktivierung oder Deaktivierung der Sonde sorgen usw.

Zur Implementierung des verteilten Prozeßrechnersystems, wie es aus den Fig. 2 bis 4 entnehmbar ist, sind üblicherweise verschiedene Definitionsschritte voranzustellen. So ist es notwendig, im selektierten Leitrechner, der von dem Personalcomputer PC1 realisiert wird, einige Grundinformationen über die verfahrenstechnische Anlage gemäß Fig. 1 zu definieren. So wird zum einen definiert, welche Prozeßrechner in der Anlage existieren, wobei die Computer PC1 bis PC4 durchnumeriert und ihnen eine jeweilige Bezeichnung zugeordnet werden. Die folgende Tabelle 1 stellt diesen Sachverhalt dar:

| **Computernummer** | **Computername** |
|---|---|
| 1 | Leitrechner |
| 2 | Steuercomputer Bau 15 |
| 3 | Steuercomputer Bau 25 |
| 4 | Steuercomputer Bau 35 |

Als weiterer Schritt wird eine Typisierung der in den einzelnen Personalcomputem PC1 bis PC4 implementierten Software-Steuerungsmodulen SM bezüglich der Funktion der von ihnen gesteurten Anlagenkomponenten vorgenommen. Dabei wird jeder Typ von Software-Steuerungsmodul SM über eine eindeutige Nummer identifiziert. Zusätzlich wird für jeden Typ eine Modulbezeichnung vergeben, was sich aus der folgenden Tabelle 2 erschließt:

| **Modul-Typennummer** | **Modulbezeichnung** |
|---|---|
| 1 | Weiche |
| 2 | Bunkerauslaufschieber |
| 3 | Füllstandssonde |
| 4 | Zellenradschleuse |
| 5 | Förderluftklappe |
| 6 | Fördergebläse |

Im nächsten Schritt wird festgelegt, welche Befehle jedes Software-Steuerungsmodul SM versteht. Dies wird aus der folgenden Tabelle 3 deutlich.

| **Modulbezeichnung** | **Befehlsnummer** | **Befehlsbezeichnung** |
|---|---|---|
| Weiche | 1 | Durchgang |
| Weiche | 2 | Abzweig |
| Bunkerauslaufschieber | 1 | auf |
| Bunkerauslaufschieber | 2 | zu |
| Füllstandssonde | 1 | aktivieren |
| Füllstandssonde | 2 | deaktivieren |
| Zellenradschleuse | 1 | ein |
| Zellenradschleuse | 2 | aus |
| Förderluftklappe | 1 | auf |
| Förderluftklappe | 2 | zu |
| Fördergebläse | 1 | ein |
| Fördergebläse | 2 | aus |

Aus dieser Tabelle geht z. B. hervor, daß ein Modul mit der Bezeichnung "Weiche" zwei Befehle "Durchgang" und "Abzweig" verarbeiten kann, denen die Befehlsnummer "1" bzw. "2" zugeordnet ist.

Schließlich ist noch festzulegen, in welchen Prozeßrechnern PC2, PC3, PC4 welche Software-Steuerungsmodule SM für welche Komponenten der verfahrenstechnischen Anlage installiert sind. Die entsprechende Aufstellung ergibt sich aus der nachfolgenden Tabelle 4.

| **Objektname** | **Computername** | **Modulnummer** | **Modulbezeichnung** |
|---|---|---|---|
| W-001 | Steuercomputer Bau 15 | 1 | Weiche |
| F-001 | Steuercomputer Bau 15 | 2 | Füllstandssonde |
| S-001 | Steuercomputer Bau 25 | 1 | Bunkerauslaufschieber |
| W-002 | Steuercomputer Bau 25 | 2 | Weiche |
| Z-001 | Steuercomputer Bau 25 | 3 | Zellenradschleuse |
| K-001 | Steuercomputer Bau 35 | 1 | Förderluftklappe |
| M-001 | Steuercomputer Bau 35 | 2 | Fördergebläse |

Als Beispiel für eine Zuordnung aufgrund der vorstehenden Tabelle ist z. B. im Prozeßrechner mit dem Namen "Steuercomputer Bau 15" (entspricht Computer Nr. 2 aus Tabelle 1) ein Software-Steuerungsmodul mit der Modulnummer 1 installiert. Es ist vom Modultyp "Weiche" (entspricht Modul-Typennummer 1 entsprechend Tabelle 2) und ist für die Steuerung der Komponente W-001 zuständig.

Als nächster verfahrensvorbereitender Schritt wird die verfahrenstechnische Schrittkette definiert, die am Anfang der Beschreibung des Ausführungsbeispiels bereits aufgelistet, der guten Ordnung halber jedoch nochmals in der Form der nachfolgenden Tabelle 5 geschlossen dargestellt werden soll.

| **Schrittnummer** | **Schrittbezeichnung** |
|---|---|
| 1 | Wegelemente stellen |
| 2 | Förderluft ein |
| 3 | Dosierorgan ein |
| 4 | Materialaustrag freigeben |
| 5 | Warten auf Zielbunker voll |
| 6 | Materialaustrag sperren |
| 7 | Dosierorgan aus |
| 8 | Förderluft aus |
| 9 | Wegelemente rückstellen |

Aus dieser verfahrenstechnischen Schrittkette kann die eigentliche steuerungstechnische Schrittkette definiert werden, die die einzelnen Komponenten mit ihren Funktionen ablaufgerecht wiedergibt. Die folgende Tabelle 6 zeigt diese definierte steuerungstechnische Schrittkette.

| **Schrittbezeichnung** | **Objektname** | **Befehlsbezeichnung** |
|---|---|---|
| Wegelemente stellen | W-001 | Abzweig |
| Wegelemente stellen | W-002 | Durchgang |
| Wegelemente stellen | K-001 | auf |
| Förderluft ein | M-001 | ein |
| Dosierorgan ein | Z-001 | ein |
| Materialaustrag freigeben | S-001 | auf |
| Warten auf Zielbunker voll | F-001 | aktivieren |
| Materialaustrag sperren | S-001 | zu |
| Dosierorgan aus | Z-001 | aus |
| Förderluft aus | M-001 | aus |
| Wegelemente rückstellen | K-001 | zu |
| Wegelemente rückstellen | F-001 | deaktivieren |

Zur Umsetzung der verfahrenstechnischen Schrittkette gemäß Tabelle 5 in die verfahrenstechnische Schrittkette gemäß Tabelle 6 wird erläuternd hinzugefügt, daß z. B. die Schrittnummer 1 in Tabelle 5 in drei aufeinanderfolgende Schritte mit der Bezeichnung "Wegelementen stellen" bezüglich der Objektnamen "W-001", "W-002", "K-001" und mit den entsprechend zugeordneten Befehlsbezeichnungen "Abzweig", "Durchgang" und "auf" umgesetzt wird. Dies bedeutet nichts anderes, als daß im verfahrenstechnischen Schritt 1 "Wegelemente stellen" eben die Weiche W-001 auf Abzweig, die Weiche W-002 auf Durchgang gestellt und die Förderluftklappe K-001 geöffnet werden müssen. Die Referenz zwischen den verfahrens- und steuerungstechnischen Schrittketten läßt sich leicht aus einem Vergleich zwischen Tabelle 5 und 6 herleiten, so daß weitere beispielhafte Erläuterungen nicht notwendig sind.

Anhand der vorstehenden Erläuterungen im Zusammenhang mit den gezeigten Tabellen wird deutlich, daß als quasi "programmiertechnische Vorbereitung" die einzelnen Prozeßrechner (Personalcomputer PC1 bis PC4), jedes Software-Steuerungsmodul SM entsprechend seines Typs und seiner Funktionsbefehle sowie die einzelnen Komponenten W-001, W-002, K-001 usw. tabellarisch definiert sind. Diese Definitionen dienen als Grundlage, um mit Hilfe einer Übersetzer- oder Transformationssoftware durch Zugriff auf die entsprechenden Tabellen aus der steuerungstechnischen Schrittkette, wie sie in Tabelle 6 dargestellt ist, eine von den Prozeßrechnern verarbeitbare Schrittketten-Tabelle zu generieren, die - wie später noch erläutert wird - wiederum dynamisch in Teilschrittketten zerlegt wird. Durch eine entsprechende Transformation ergibt sich aus der steuerungstechnischen Schrittkette gemäß Tabelle 6 die Schrittketten-Tabelle gemäß Fig. 7, die für Computer verarbeitbare Informationen aufweist.

Diese Umsetzung zwischen den beiden Schrittketten mit Hilfe der Transformationssoftware wird anhand des allerersten Schrittes gemäß Tabelle 6 mit der Schrittbezeichnung "Wegelemente stellen" kurz erläutert. So wird durch Zugriff auf Tabelle 5 ermittelt, daß die Schrittbezeichnung "Wegelementestellen" dem Schritt Nr. 1 zuzuordnen ist. Durch Zugriff auf Tabelle 4 wird aus dem Objektnamen "W-001" ermittelt, daß diesem der Prozeßrechner mit dem Computernamen "Steuercomputer Bau 15" und darin das Modul mit der laufenden Nummer 1 zugeordnet ist. Der "Steuercomputer Bau 15" weist die Computernummer 2 auf, wie aus Tabelle 1 hervorgeht. Der Befehl mit der Bezeichnung "Abzweig" hat laut Tabelle 3 die Befehlsnummer 2. Insofern ergibt sich die Zahlenkombination 1-2-1-2 in Zeile 1 der Tabelle 7.

| **Schrittnummer** | **Computernummer** | **Modulnummer** | **Befehlsnummer** |
|---|---|---|---|
| 1 | 2 | 1 | 2 |
| 1 | 3 | 2 | 1 |
| 1 | 4 | 1 | 1 |
| 2 | 4 | 2 | 1 |
| 3 | 3 | 3 | 1 |
| 4 | 3 | 1 | 1 |
| 5 | 2 | 2 | 1 |
| 6 | 3 | 1 | 2 |
| 7 | 3 | 3 | 2 |
| 8 | 4 | 2 | 2 |
| 9 | 4 | 1 | 2 |
| 9 | 2 | 2 | 2 |

In einem weiteren Kernschritt des erfindungsgemäßen Verfahrens erfolgt anschließend ein Zerlegen der steuerungstechnischen Schrittkette bzw. ihrer umgesetzten Form gemäß Tabelle 7 unter Zusammenfassen der einem jeweiligen Prozeßrechner PC2, PC3, PC4 zugeordneten Schritte zu einer Teilschrittkette. Kriterium hierbei ist die Verteilung der Softwaresteuerungmodule auf die einzelnen Personalcomputer PC2, PC3, PC4. So werden beispielsweise dem Personalcomputer PC2 mit der Computernummer 2 die Schrittnummern 1, 5 und 9 gemäß der nachfolgenden Tabelle 8 zugeordnet. Dort wird in Schritt Nr. 1 das Modul Nr. 1 (zugehörig zur Weiche 001) mit dem Befehl Nr. 2 ("Abzweig") angesteuert.

Dieselbe Zuordnung wird für die Personalcomputer PC3 und PC4 mit den Computetnummern 3 und 4 vorgenommen, wie sich aus den nachfolgenden Tabellen 9 und 10 ergibt.

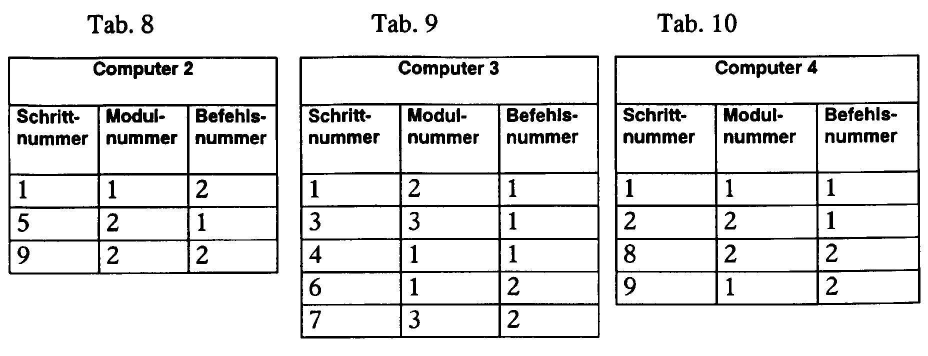

Die vorstehenden Teilschrittketten gemäß Tabellen 8 bis 10 der steuerungstechnischen Schrittkette gemäß Tabelle 6 bzw. 7 werden nun vom Leitrechner PC1 in die entsprechenden Prozeßrechner PC2 bis PC4 über das Computernetzwerk CM 6 übertragen. In jedem Prozeßrechner PC2 bis PC4 ist ein Arbeitsprogramm implementiert, dessen Aufgabe es ist, die ihm zugeordnete Kette, der dynamisch verteilten Teilschrittketten unter Verwendung der im jeweiligen Prozeßrechner PC2 bis PC4 geladenen Software-Module SM koordiniert abarbeiten zu können. Damit ist die Funktion der verfahrenstechnischen Anlage gemäß Fig. 1 durch einen entsprechenden Ablauf der steuerungstechnischen Schrittkette gewährleistet.

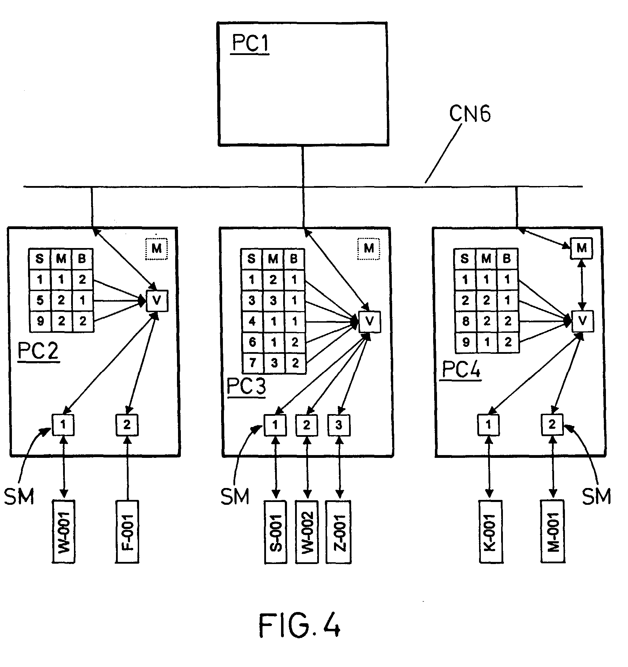

Für die Koordination bei der Abarbeitung der Teilschrittketten ist in jedem Prozeßrechner PC2, PC3, PC4 jeweils ein Schrittketten-Master M installiert, wie aus Fig. 4 deutlich wird. Zu einem prozeßtechnischen Ablauf muß nun einer dieser Schrittketten-Master M in einem bestimmten Prozeßrechner PC2, PC3, PC4 aktiviert werden, damit eine Koordination in eindeutiger Weise erfolgen kann. Welcher der Schrittketten-Master M aktiviert ist, ist für die dynamisch verteilten Schrittketten ohne Belang. Bei dem dargestellten Ausführungsbeispiel gemäß Fig. 4 ist der Schrittketten-Master M des Prozeßrechners PC4 aktiv. Die Auswahl kann in diesem Zusammenhang beispielsweise vom Leitrechner PC1 getroffen werden (z. B. per Zufallsprinzip oder aufgrund einer programmiertechnischen Vorgabe). Auch der Leitrechner PC1 selbst könnte die Funktion des Schrittketten-Masters übernehmen. Die Schrittketten-Master M in den Prozeßrechnern PC2 und PC3 sind inaktiv, wie durch die jeweils punktierten Rahmen angedeutet ist. Ferner ist darauf hinzuweisen, daß in Fig. 4 noch entsprechende Datenspeicher D zur Speicherung der den Tabellen 8 bis 10 entsprechenden Teilschrittketten und eine Prozessoreinheit V zur Schrittkettenverwaltung und Kommunikation mit den Software-Steuerungsmodulen SM schematisch dargestellt ist.

Beim erfindungsgemäßen Betriebsverfahren für das in Fig. 4 dargestellte Prozeßrechnersystem wird vom Leitrechner PC1 jedem Steuercomputer PC2 bis PC4 "seine" Teilkette gemäß Tabelle 8, 9 oder 10 aus der steuerungstechnischen Schrittkette inklusive der Information übermittelt, daß der Prozeßrechner PC4 den aktiven Schrittketten-Master M beinhaltet. Prozeßrechner PC4 erhält vom Leitrechner PC1 eine zusätzliche Information, daß er für diese steverungstechnische Schrittkette der aktive Schrittketten-Master ist.

Die Verfahrensweise des Prozeßrechnersystems gemäß Fig. 4 beim Abarbeiten der dynamisch verteilten Teilschrittketten ist wie folgt darzustellen:

Alle Steuercomputer PC2, PC3, PC4, die eine jeweilige Teilkette abzuarbeiten haben, melden ihren Status an den Prozeßrechner PC4, der den aktiven Schrittketten-Master M beinhaltet. Dieser führt einen Schrittzähler, der vor dem Abarbeitungsstart initialisiert wird.

Nachdem alle beteiligten Prozeßrechner PC2 bis PC4 Bereitschaft an den aktiven Schrittketten-Master gemeldet haben, gibt dieser den Befehl, die für die jeweiligen Teilschrittketten benötigten Komponenten bzw. die ihnen zugeordneten Software-Steuerungsmodule SM (im folgenden als "Objekte" bezeichnet") zu reservieren. Dieser Schritt dient der sogenannten Verriegelung, um zu vermeiden, daß eine neu gestartete Schrittkette Objekte einer bereits laufenden Schrittkette ebenfalls versucht anzusteuern. Sobald die Prozeßrechner PC2 bis PC4 die betroffenen Objekte reservieren konnten, geben sie eine entsprechende Statusmeldung an den Schrittketten-Master ab. Nach erfolgreicher Reservierungsmeldung aller beteiligten Prozeßrechner gibt der Schrittketten-Master M allen Prozeßrechnern den Befehl, für die aktuelle steuerungstechnische Schrittkette in den Schritt 1 zu gehen. Jede Teilschrittkettenverwaltung V in den einzelnen Prozeßrechnern PC2 bis PC4 prüft nun für sich, ob sie einen Schritt 1 zu bearbeiten hat. Bei dem in Fig. 4 gezeigten Beispiel trifft dies für alle drei Teilschrittketten in den Prozeßrechnern PC2 bis PC4 zu. Falls ein Prozeßrechner einen entsprechenden Schritt nicht zu bearbeiten hat, gibt er sofort eine Statusmeldung "fertig" an den Schrittketten-Master M ab und liefert auch gleich die nächste Schrittnummer mit, die er zu bearbeiten hat. Bei der Bearbeitung des Schrittes 2 beispielsweise meldet der Prozeßrechner PC2 sofort den Status "fertig", da er keinen Schritt 2 zu bearbeiten hat. Gleichzeitig meldet er als seinen nächsten zu bearbeitenden Schritt den "Schritt 5" an den Schrittketten-Master M.

Bei der Abarbeitung von Schritt 1, der in allen drei Teilschrittketten von PC2, PC3 und PC4 vorhanden ist, steuern die entsprechenden Prozeßrechner die in diesem Schritt definierten Software-Steuerungsmodule mit der entsprechenden Befehlsart an. So erhält die Weiche W-001 dadurch den Befehl "Abzweig", das entsprechende Software-Steuerungsmodul SM mit der Nummer 1 im Rechner PC2 setzt daraufhin die notwendigen Ausgänge und startet eine Überwachungszeit. Wenn innerhalb der Überwachungszeit die Rückmeldung der Endlage der Weiche für "Abzweig" kommt, meldet das Software-Steurungsmodul den Status "fertig" an die Prozssoreinheit V für die Teilschrittkettenverwaltung. Wenn sich alle betroffenen Software-Steuerungsmodule bei der Teilschrittkettenverwaltung zurückgemeldet haben, meldet der betroffene Prozeßrechner die Ausführung des Schrittes 1 an den Schrittketten-Master und gibt - wie oben - sofort die Nummer des nächsten Schrittes mit, den er zu bearbeiten hat.

Wenn alle beteiligten Prozeßrechner die Ausführung des Schritt 1 an den Schrittketten-Master M gemeldet haben, prüft dieser, welche Nummer die kleinste als nächstes zu verarbeitende Schrittnummer ist und gibt allen beteiligten Prozeßrechnern eine entsprechende Befehlsmeldung, in diesen Schritt zu wechseln. Die vorstehend beschriebene Abarbeitungsroutine wiederholt sich dann je nachdem, ob der jeweilige Prozeßrechner die entsprechende Schrittnummer zu bearbeiten hat oder nicht.

Auf die vorstehend erläuterte Weise werden in den entsprechenden Teilschrittketten die Schritte 1 bis 9 abgearbeitet. Im letzten Schritt 9 wird in der Teilschrittkette im Prozeßrechner PC2 beispielsweise das Softwaremodul 2 für die Fühlstandssonde F-001 angesteuert, um diese mit dem Befehl Nummer 2, d. h. "deaktivieren" anzusteuern. Gleichzeitig wird im Schritt 9 beim Prozeßrechner PC4 das Software-Steuerungsmodul 1 für die Förderluftklappe K-001 mit dem Befehl Nr. 2 angesteuert, d. h. die Förderluftklappe K-001 wird geschlossen.

Aus dem Vorstehenden wird deutlich, daß beim Abarbeiten der Teilschrittketten die einzelnen Prozeßrechner PC2, PC3, PC4 mit dem SchrittkettenMaster M im Prozeßrechner PC4 jeweils unter Austausch von Befehls- und Statusmeldungen kommunizieren.

Nach dem Abarbeiten aller Schritte 1 bis 9 in den entsprechenden Teilschrittketten sendet der Schrittketten-Master M an alle beteiligten Prozeßrechner PC2 bis PC4 einen Befehl, die reservierten Software-Steuerungsmodule SM wieder freizugeben. Die ordnungsgemäße Ausführung dieses Befehls wird durch eine Quittierungsmeldung "fertig" aller beteiligten Prozeßrechner PC2 bis PC4 an den Schrittketten-Master M beantwortet, der eine Fertigmeldung an den Leitrechner PC1 sendet.

Als nachgeschaltete Variante zu dieser vorstehend erörterten Routine können die in den jeweiligen Prozeßrechner geladenen Teilschrittketten nach Abarbeiten einer Schrittkette wieder gelöscht werden. In diesem Falle liegen die Teilketten einer steuerungstechnischen Schrittkette nur so lange im Speicher der jeweiligen Prozeßrechner, wie sie zum Abarbeiten benötigt werden. Damit ergibt sich insgesamt eine Einsparung an notwendigen Speicherplatz für eine bestimmte Steuerungsaufgabe.

Bezüglich der Sicherheit des mit dem erfindungsgemäßen Verfahren betriebenen verteilten Prozeßrechnersystems ist festzuhalten, daß die Prozeßrechner und insbesondere derjenige, der den Schrittkettenmaster M beinhaltet, permanent die Netzwerkverbindung überwachen. Fällt eine Netzwerkverbindung aus oder tritt eine Störung auf, kann auf eine gegebenenfalls vorhandene redundante Netzwerkverbindung umgeschaltet werden. Ist eine solche redundante Netzwerkverbindung nicht vorhanden oder es fällt eine der beteiligten Steuercomputer oder ein darin befindliches Software-Steuerungsmodul aus, so bringt aufgrund einer entsprechenden Default-Einstellung jeder Prozeßrechner die betroffenen Objekte in eine eigensichere Position. Beispielsweise wird der Bunkerauslaufschieber S-001 also geschlossen.

Bei Auftreten einer Störung beim Abarbeiten einer Teilschrittkette kann ferner vom entsprechenden Prozeßrechner PC2 bis PC4 an den Schrittketten-Master M eine entsprechende Störungsmeldung übermittelt werden. Diese erfolgt insbesondere so, daß das betroffene Objekt diese Störung an seine Teilschrittverwaltung V unter Angabe einer entsprechenden Störungsklasse meldet. Die betroffene Teilschrittverwaltung V meldet diese Information an den Schrittketten-Master M weiter. Dieser steuert die angeschlossenen Prozeßrechner PC2 bis PC4 in einen entsprechenden Störungsverarbeitungsbetrieb, indem anhand der Störungsklasse an alle beteiligten Prozeßrechner PC2 bis PC4 ein Befehl zum Wechseln in diesen Störungsverarbeitungsbetrieb für die gegebene Störungsklasse übermittelt wird. Die Verarbeitung dieser Störung kann anhand der mitgeteilten Störungsklassen dann wiederum als dynamische verteilte Schrittkette erfolgen. Diese kann bereits mit der eigentlichen steuerungstechnischen Schrittkette für den Normalbetrieb dynamisch verteilt worden sein. Alternativ ist auch eine permanent in den Speicher der jeweiligen Prozeßrechner geladene Schrittkette oder Verknüpfungssteuerung einsetzbar.

Eine in den oben stehenden Tabellen und den beigefügten Zeichnungen nicht dargestellte Variante besteht ferner darin, daß der jeweils selektierte Schrittketten-Master M die Schrittnummern kennt, die von den einzelnen Prozeßrechnern PC2 bis PC4 abzuarbeiten sind. In diesem Fall bekommt der jeweilige Prozeßrechner nur dann einen Befehl zum Abarbeiten eines bestimmten Schrittes, wenn dieser Schritt bei einem an ihm angeschlossenen Objekt durchzuführen ist. Dies reduziert zwar die Netzwerkbelastung, erhöht jedoch die Speicherauslastung des Prozeßrechners, der dem Schrittketten-Master zugeordnet ist.

Zusammenfassend sollen die wesentlichen Merkmale und Vorteile der Erfindung zur Darstellung deren Leistungsfähigkeit nochmals wie folgt umrissen werden:
- Die Programmteile zur Steuerung eines verteilten Prozeßrechnersystems, die ständig benötigt werden, wie die Software-Steuerungsmodule für die einzelnen Anlagenkomponenten, sind fest im Speicher der jeweiligen Prozeßrechner abgelegt und bearbeitbar.
- Die Programmteile, die nur bei Bedarf benötigt werden, nämlich die Teilschrittketten, werden automatisch in die jeweiligen Prozeßrechner geladen.
- Aufgrund der erfindungsgemäßen Betriebsweise des Prozeßrechnersystems muß ein Programmierer lediglich verfahrenstechnische Schrittketten definieren können, ohne Rücksicht darauf nehmen zu müssen, in welchen Prozeßrechnern die benötigten Ein- und Ausgänge liegen. Darauf aufsetzend kann die Erfindung eine Schrittkette automatisch für die beteiligten Prozeßrechner zerlegen und die daraus resultierenden Teilschrittketten automatisch an die betroffenen Prozeßrechner verteilen.
- Die Teilschrittketten, die automatisch in die verschiedenen Prozeßrechner geladen werden, beinhalten einen automatischen Mechanismus der Koordinierung über das Ansprechen des jeweils definierten Schrittkettenmasters.
- Die Teilschrittketten beinhalten ferner einen automatischen Mechanismus, der für eine betriebssichere Verriegelungs-, Störungs- und Ausfallstrategie sorgt. Nicht mehr benötigte Teilschrittketten werden automatisch aus dem Speicher des jeweiligen Prozeßrechners entfernt, der einer bestimmten Automatisierungskomponente zugeordnet ist.
- Das erfindungsgemäße Verfahren erlaubt ein von den eingesetzten Automatisierungskomponenten in hardware-technischer Hinsicht unabhängiges Arbeiten. Dadurch ist ein heterogener Einsatz von verschiedensten Automatisierungskomponenten unter einem verteilten Prozeßrechnersystem möglich.
- Die Erfindung stellt einen einfachen Verriegelungsmechanismus zur Verfügung, so daß der Programmierer auf einfache Weise sicherstellen kann, daß es nicht zu ungewollten gleichzeitigen Mehrfach-Benutzungen von Anlagenteilen, wie z. B. Tanks, Rohrleitungen, Wegelementen, Maschinen usw. kommt.
- Der Anwender der Erfindung braucht lediglich ein Verfahrenstechniker zu sein, der sein vertahrenstechnisches Know-How direkt über einen grafischen Editor des Prozeßrechnersystems in die Logik der Schrittketten und der von ihr verwendeten Automatisierungselemente umsetzt. Er muß lediglich für die korrekte Umsetzung seines Know-Hows in die Schrittketten sorgen. Alle übrigen Funktionen wie die Verteilung der System-Resourcen, der Aufbau der Kommunikationswege, die Durchführung der sicherheitsrelevanten Verriegelung usw. stellt das System nach der Parametrierung der Schrittketten selbst her.

## Patentansprüche

1. Verfahren zum Betrieb eines verteilten Prozeßrechnersystems für die Steuerung verfahrenstechnischer Anlagen mit Komponenten, wie Aktoren, Sensoren od. dgl., entsprechend einer den Anlagenprozeß charakterisierenden steuerungstechnischen Schrittkette, die die einzelnen Komponenten (W-001, ...) mit ihren Funktionen ablaufgerecht wiedergibt, mit folgenden Verfahrensschritten:
- Installieren eines Software-Steuerungsmoduls (SM) für jede Anlagenkomponente (W-001, ...) im zugehörigen Prozeßrechner (PC2), das nach Funktion und Befehlssatz für die jeweilige Komponente (W-001, ...) sowie entsprechend dem Prozeßrechnertyp definiert ist,
- Selektieren eines koordinierenden Leitrechners (PC1) aus dem Prozeßrechnersystem,
- Zerlegen der steuerungstechnischen Schrittkette unter Zusammenfassen der einem jeweiligen Prozeßrechner (PC2 - PC4) zugeordneten Schritte zu einer Teilschrittkette und dynamisches Laden der jeweiligen Teilschrittkette in den jeweils zugeordneten Prozeßrechner (PC2 - PC4) mit Hilfe des koordinierenden Leitrechners (PC1), und
- Ablauf der steuerungstechnischen Schrittkette durch koordiniertes Abarbeiten der dynamisch verteilten Teilschrittketten in den einzelnen Prozeßrechnern (PC2 - PC4) unter Verwendung der in den Prozeßrechnern (PC2 - PC4) geladenen Software-Steuerungsmodule (SM).

2. Verfahren nach Anspruch 1, **dadurch gekennzeichnet, daß** die einzelnen Prozeßrechner (PC2 - PC4), jedes Software-Steuerungsmodul (SM) entsprechend seines Typs und seiner Funktionsbefehle sowie die einzelnen Komponenten (W-001, ...) tabellarisch definiert sind, wobei durch eine Transformationssoftware auf der Basis der entsprechenden Tabellen aus der steuerungstechnischen Schrittkette eine von den Prozeßrechnern (PC2 - PC4) verarbeitbare Schrittkettentabelle generiert wird, die wiederum dynamisch in die Teilschrittketten zerlegt wird.

3. Verfahren nach Anspruch 1 oder 2, **dadurch gekennzeichnet, daß** in jedem Prozeßrechner (PC1 bis PC4) ein Schrittketten-Master (M) zur koordinierten Abarbeitung der Teilschrittketten installiert wird, wobei einer dieser Schrittketten-Master (M), insbesondere vom Leitrechner (PC1) für die Koordination aktiviert wird.

4. Verfahren nach Anspruch 3**, dadurch gekennzeichnet, daß** mit dem Laden der Teilschrittketten in die jeweiligen Prozeßrechner (PC2 - PC4) diesen der Prozeßrechner (PC4) mit dem aktivierten Schrittketten-Master (M) mitgeteilt wird.

5. Verfahren nach Anspruch 3 oder 4, **dadurch gekennzeichnet, daß** beim Abarbeiten der Teilschrittketten die einzelnen Prozeßrechner (PC2 - PC4) mit dem Schrittketten-Master (M) unter Austausch jeweiliger Befehls- und Statusmeldungen kommunizieren.

6. Verfahren nach einem der Ansprüche 3 bis 5, **dadurch gekennzeichnet, daß** zu Beginn einer Schrittkette der Schrittketten-Master (M) jedem Prozeßrechner (PC2 - PC4) einen Befehl zur Reservierung der in der jeweiligen Teilschrittkette beteiligten Software-Steuerungsmodule (SM) gibt, welche Reservierung nach Abarbeiten der Schrittkette wieder aufgehoben wird.

7. Verfahren nach einem der Ansprüche 1 bis 6, **dadurch gekennzeichnet, daß** die in die jeweiligen Prozeßrechner (PC2 - PC4) geladenen Teilschrittketten nach Abarbeiten der Schrittkette wieder gelöscht werden.

8. Verfahren nach einem der Ansprüche 3 bis 7, **dadurch gekennzeichnet, daß** der koordinierende Leitrechner (PC1) und/oder der Schrittketten-Master (M) die Netzwerksverbindung (CN6) zwischen den Prozeßrechnem (PC1 - PC4) überwacht und bei Auftreten einer Störung gegebenenfalls auf eine redundante Netzwerk-Verbindung umschaltet.

9. Verfahren nach einem der Ansprüche 1 bis 8, **dadurch gekennzeichnet, daß** bei Ausfall oder Störung eines Prozeßrechners (PC1 - PC4) die daran angeschlossenen Komponenten (W-001, ...) in einen eigensicheren Zustand verbracht werden.

10. Verfahren nach einem der Ansprüche 3 bis 9, **dadurch gekennzeichnet, daß** bei Auftreten einer Störung beim Abarbeiten einer Teilschrittkette vom entsprechenden Prozeßrechner (PC2 - PC4) an den Schrittketten-Master (M) eine entsprechende Störungsmeldung gegeben wird, der darauf die angeschlossenen Prozeßrechner (PC2 - PC4) in einen Störungsverarbeitungsbetrieb steuert.

11. Verfahren nach Anspruch 10, **dadurch gekennzeichnet, daß** der Störungsverarbeitungsbetrieb wiederum über dynamisch verteilte Teilschrittketten erfolgt.
